# EUROPEAN PATENT APPLICATION

(11) **EP 4 787 137 A1**
(43) Date of publication of application: **05.08.2026**
(21) Application number: 26150143.1
(22) Date of filing: 05.01.2026
(51) Int. Cl.: G06F 3/06

(54) **HINTED WRITE COALESCING**

(30) Priority: 30.01.2025 US 202519041078
(71) Applicant: Avago Technologies International Sales Pte. Limited, Singapore 768923 (SG)
(72) Inventor: Jana, Arun Prakash, 560075 Bangalore (IN)
(74) Representative: Grünecker Patent- und Rechtsanwälte PartG mbB

(57) **Abstract**

An apparatus including a host and a controller. The host sets a binary value for metadata in a field of a command structure. In response to receiving a stream of write commands from the host, the controller parses the command structure in write command. The write command is one of the write commands in the stream. The command structure extracts the binary value from the metadata. From the binary value, the controller derives a proximity of the write command relative to another write command in the stream.

## Description

### BACKGROUND

Fault-tolerant storage systems are electronic systems that employ data striping and parity across multiple drives to provide redundancy, efficient storage utilization, and reliable data recovery in the event of drive failures. When performing a write operation, a storage controller in the fault-tolerant storage system calculates parity to maintain redundancy. When performing a read operation, the storage controller retrieves data directly from the relevant drive, and if a drive has failed, the storage controller reconstructs the missing data using the parity and the remaining data blocks in the data stripe.

### BRIEF DESCRIPTION OF DRAWINGS

The accompanying drawings, which form part of this specification, depict examples of the disclosure and, along with the description, illustrate the underlying principles of these examples. The detailed description is provided with reference to the accompanying figures. In the figures, the leading digit(s) of each reference number correspond to the figure where the reference number first appears. The figures may not be drawn to scale, and certain proportions or elements is exaggerated in some figures to enhance the clarity of specific features.
FIG. 1 illustrates an exemplary system, in accordance with one or more embodiments of the disclosure.
FIG. 2 illustrates an exemplary flow diagram, in accordance with one or more embodiments of the disclosure.
FIG. 3 illustrates an exemplary command structure, in accordance with one or more embodiments of the disclosure.
FIG. 4 illustrates an exemplary stream of payloads, in accordance with one or more embodiments of the disclosure.

In the drawings, like reference symbols and numerals indicate the same or similar components. Like elements in the various figures are denoted by like reference symbols and numerals for consistency. Identical or similar items across different figures are indicated by the same reference numbers. Unless otherwise indicated, like elements and method steps are referred to with like reference numerals.

### DETAILED DESCRIPTION OF THE INVENTION

The following describes technical solutions in this specification with reference to the accompanying drawings. Exemplary embodiments are described in detail with reference to the accompanying drawings.

Efficient write coalescing in RAID virtual devices (VDs) may rely on accurately detecting input/output (I/O) proximity and patterns, but this is complicated by unpredictable workloads and limited communication between the host and storage controller. VDs comprise heterogeneous physical drives managed by storage controllers, yet the lack of integration between the host's insights and the controller's operations hampers optimization. Addressing these challenges may require a cohesive approach that combines the host's detailed knowledge of I/O patterns with the controller's capability to efficiently manage data, ultimately improving performance across diverse workloads.

A host-side software stack, with its full visibility into buffer writes and Command Descriptor Block (CDB) creation, is ideally positioned to identify sequential or related I/Os. In contrast, storage controllers operate independently and must track logical block addresses (LBAs) to detect patterns, a method that becomes impractical for small, random, or fragmented write workloads. This disconnect often results in degraded performance, particularly when non-contiguous or small sequential writes are issued, as they fail to trigger effective coalescing and optimization.

Further complicating coalescing, write patterns that span row boundaries without aligning to them unnecessarily split intermediate rows, reducing efficiency. While workloads such as content streaming or file hosting follow predictable write behaviors at the host level, the storage controller cannot leverage this knowledge. Additionally, the standard small computer system interface (SCSI) Write CDB does not support fields for communicating I/O patterns, and though custom CDBs could address this limitation, their widespread adoption is impractical. Accordingly, there is a need in the art for an improved server.

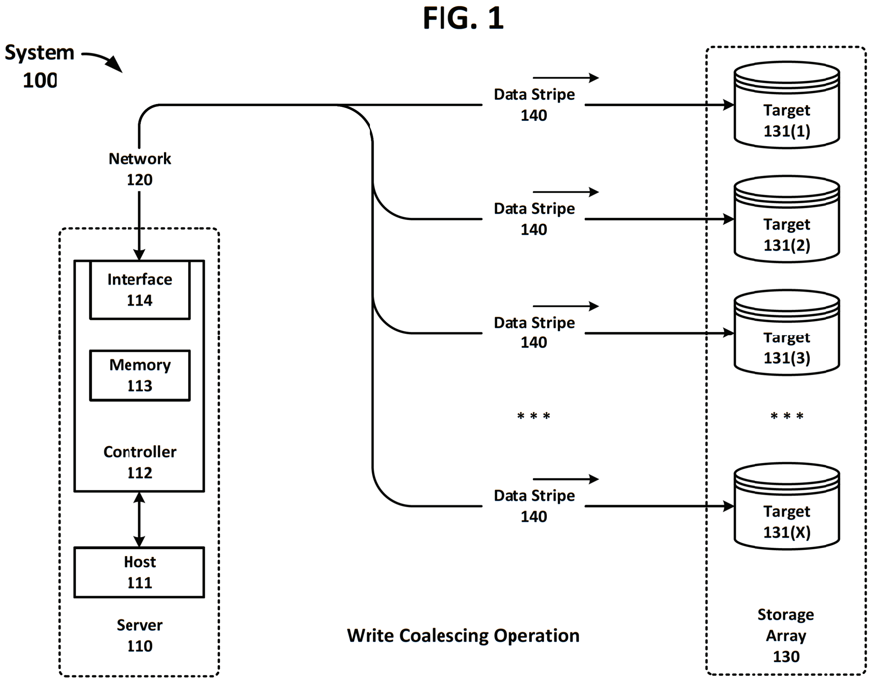

Turning now to FIG. 1, system 100 is illustrated. In some implementations, system 100 may be a SCSI-based system used in storage and networking. System 100 may include, but are not limited to, tape backup systems, redundant array of independent disks (RAID) arrays, servers and/or other storage networks.

System 100 may include server 110, network 120 and storage array 130. Those skilled in the art will appreciate there is additional components in system 100.

Server 110 is an apparatus that may include host 111 and controller 112. Referred to herein, an enclosure is a physical casing or housing that may contain and protect hardware a component. In some implementations, host 111 and controller 112 reside together within the same enclosure. In other implementations, host 111 and controller 112 reside in separate enclosures.

Host 111 is any electronic hardware that may read data from storage array 130 and/or write data to storage array 130. In some implementations, host 111 may include servers, personal computers, workstations, network-attached storage (NAS) devices, virtual machines, control systems, media and content production systems, backup and archival systems, storage area networks (SANS), cloud computing hosts or specialized equipment such as medical imaging systems, electronic health record storage. In other implementations, host 111 may include surveillance systems and/or any other server, computer, or system that may interact with storage array 130.

Controller 112 is implemented in the form of electronic hardware. Controller 112 is designed to send requests such as read, write, and connect commands along network 120 to storage array 130. For instance, controller 112 is implemented as any suitable processing circuitry. The processing circuitry may include, but not limited to, at least one of a microcontroller, a microprocessor, a single processor, and a multiprocessor. Controller 112 may include at least one of an embedded controller 112 (EC), a central processing unit (CPU), an accelerated processing unit (APU), an application specific integrated circuit (ASIC), a field programmable gate array (FPGA), a complex programmable logic device (CPLD), logic circuitry, a state machine, a programmable processor, or the like. Controller 112 may include digital circuits, analog circuits or a combination of both digital and analog circuits. Analog circuits may include analog components that are suitable to process analog gate signals. Digital circuits may include switches and gates that are suitable to process digital gate signals.

Memory 113 is electronic hardware that is integrated into controller 112. Memory 113 may be a high-speed cache memory module that temporarily holds data. In some implementations, memory 113 may be a first-in-first-out queue that outputs data in the same order as received to ensure that the data first written into memory 113 is the data first to be read from memory 113. Acting as a buffer between host 111 and the slower underlying storage media (targets 131(1)-131(X)), memory 113 may enhance the speed of read and write processes compared to writing the data directly to the storage media and/or fetching the data directly from the storage media.

Also integrated into controller 112 is interface 114. Interface 114 is electronic hardware that enables controller 112 to connect and communicate with the targets 131(1)-131(X), facilitating the exchange of data and commands between controller 112 and connected targets 131(1)-131(X). In some implementations, interface 114 may be a SCSI Host Bus Adapter. In other implementations, interface 114 may be an interface such as advanced technology attachment (ATA), non-volatile memory express (NVMe), peripheral component interconnect express (TCle), fibre channel (FC), Thunderbolt, universal serial bus (USB) and/or any other interface for connecting server 110 to a storage medium.

Network 120 may include any infrastructure that facilitates a bidirectional exchange of information between server 110 and storage array 130. Network 120 may include a public and/or private data network. By way of example, network 120 may comprise or be part of a data bus, a local area network (LAN), a wide area network (WAN), a public switched telephone network, a cellular network, a core network, a satellite network, the Internet, and/or any other wired or wireless telecommunications communications network.

System 100 may include targets 131(1)-131(X), with "X" being an integer greater than 1. A plurality of the targets 131(1)-131(X) is collectively referred to herein as "targets 131." Any one of the targets 131(1)-131(X) is individually referred to herein as "target 131."

The target 131 is electronic hardware that may receive and process a request sent by controller 112. In response to processing a request from controller 112, the target 131 may manage data stored in the target 131 and send a response to controller 112 that confirms the completion of the request. In some implementations, target 131 is a storage device such as hard drive, a solid-state drive, a tape drive and/or some other storage device. In other implementations, target 131 is a RAID array and/or some other array of storage device. The target 131 may include an optical drives, a scanner, a virtual storage controller and/or any other peripheral device.

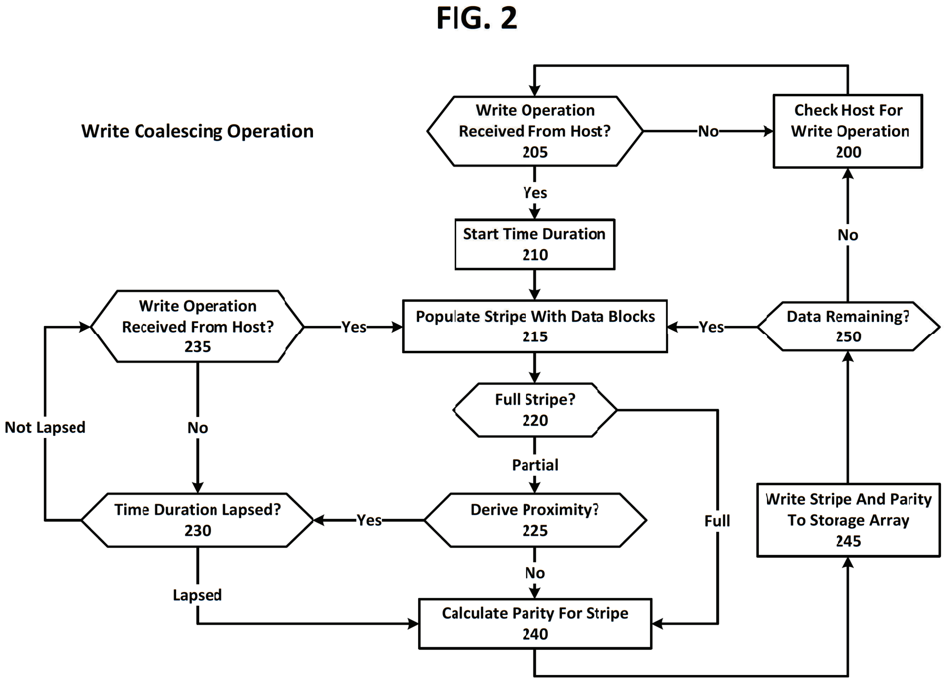

In FIG. 2, a flow diagram illustrates an example write coalescing operation performed by controller 112. Referred to herein, write coalescing is an optimization technique used during write operations that may combine multiple smaller write operations into fewer, larger writes in some instances. Referred to herein, a write operation is the process of transferring data between memory 113 and storage array 130, involving the initiation, execution, and completion of input and output operations.

In step 200 of FIG. 2, controller 112 may receive a write request stream from host 111. Referred to herein, a write request stream is a continuous series of write commands issued by host 111 to controller 112. Referred to herein, a write command is an instruction specifying details for the writing of data from server 110 to storage array 130. Host 111 may issue the write commands to controller 112. Referred to herein, "issue a write command" is the sending of a command structure from host 111 to controller 112.

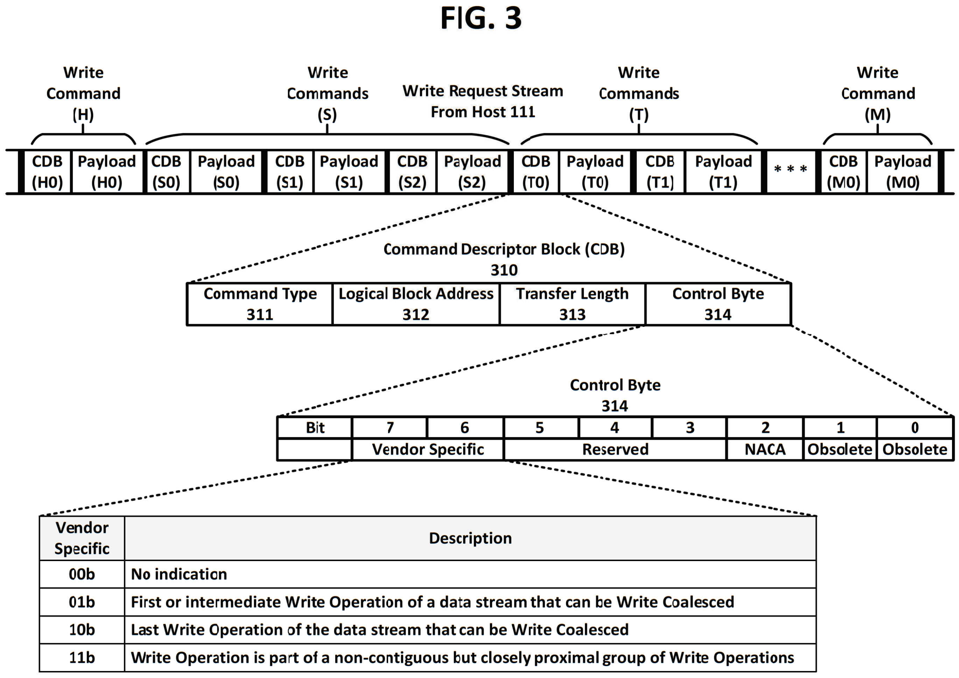

Turning now to FIG. 3, example write commands (H), (S), (T) and (M) are illustrated. Host 11 may pair a payload with a command structure in the write commands. For instance, write command (H) may include command descriptor block CDB (H0) and payload (H0). Write commands (S) may include command descriptor blocks CDBs (S0) to (S2) along with payloads (S) to (S2). Write commands (T) may include command descriptor blocks CDBs (T0) and (T1) along with payloads (T) and (T1). Write command (M) may include command descriptor block CDB (M0) and payload (M0). Although FIG. 3 illustrates example write commands (H), (S), (T) and (M), those skilled in the art will appreciate that host 111 may produce one or more write commands other than the write commands (H), (S), (T) and (M).

The write request stream may include a sequence of consecutive write commands. In FIG. 3, any single write command in the write request stream may include a command descriptor block 310 (CDB) combined with a payload. A payload referred to herein is defined as bytes of data to be written to storage array 130. Controller 112 may advance the processing in FIG. 2 from step 200 to step 205.

In step 205, controller 112 may receive a write request stream from host 111. In the absence of receiving the write request stream from host 111, controller 112 may return the processing in FIG. 2 from step 205 to step 200. Also, controller 112 may return the processing in FIG. 2 from step 205 to step 200 in the absence of detecting a write operation code in command type field 311.

On the other hand, upon receipt of the write request stream in step 205, controller 112 may parse command byte 311 to ascertain the operation to be executed. For instance, an example command descriptor block 310 (CDB) is illustrated in FIG. 3. A command descriptor block 310 provides details as how read and write operations are to be executed. Specifically, the command descriptor block 310 may define the type of operation that controller 112 is to perform, such as the reading of data from a target 131, the writing of data to the target 131, the managing of the data, the querying of the target 131 for information and/or the controlling of the target 131 behavior. By way of illustration, the command descriptor block 310 is a command structure that may include fields such as command type field 311, logical block address field 312, transfer length field 313 and control byte 314. Together, these fields may enable precise communication and efficient data handling between host 111 and controller 112.

In command type field 311, an operation code specifies the operation to be executed by the server 110. In some cases, host 111 may set command type field 311 to a read operation code for instances where the operation may happen to be a read operation for reading data from storage array 130. In other cases, host 111 may set command type field 311 to a write operation code for instances where the operation may happen to be a write operation for writing data to storage array 130.

The operation code in command byte 311 may be a write operation code for instances where the operation to be executed by server 110 is a write operation. During the write coalescing operation of FIG. 2, host 111 may set the operation to be executed as a write command. Controller 112, in step 205, may parse command type field 311 in the event that controller 112 receives a write request stream from host 111. Controller 112 may return the processing in FIG. 2 from step 205 to step 200 in the absence of detecting the write operation code in command type field 311 of a command descriptor block 310.

A payload may be associated with the command descriptor block 310, as illustrated by the example of FIG. 3. Controller 112 may queue the payload into memory 113 and advance the processing in FIG. 2 from step 205 to step 210 in response to detecting a write operation code in the command type field 311 of the command descriptor block 310.

In step 210 of FIG. 2, controller 112 may start a timer to begin measuring the time duration. Prior to or during the processing in FIG. 2, controller 112 may receive an instruction from host 111 that designates a predetermined time duration. The time duration may be a fraction of a second, a fraction of a minute, or a fraction of an hour, an hour, or longer. Upon starting the timer to begin measuring the time duration, controller 112 may advance the processing in FIG. 2 from step 210 to step 215.

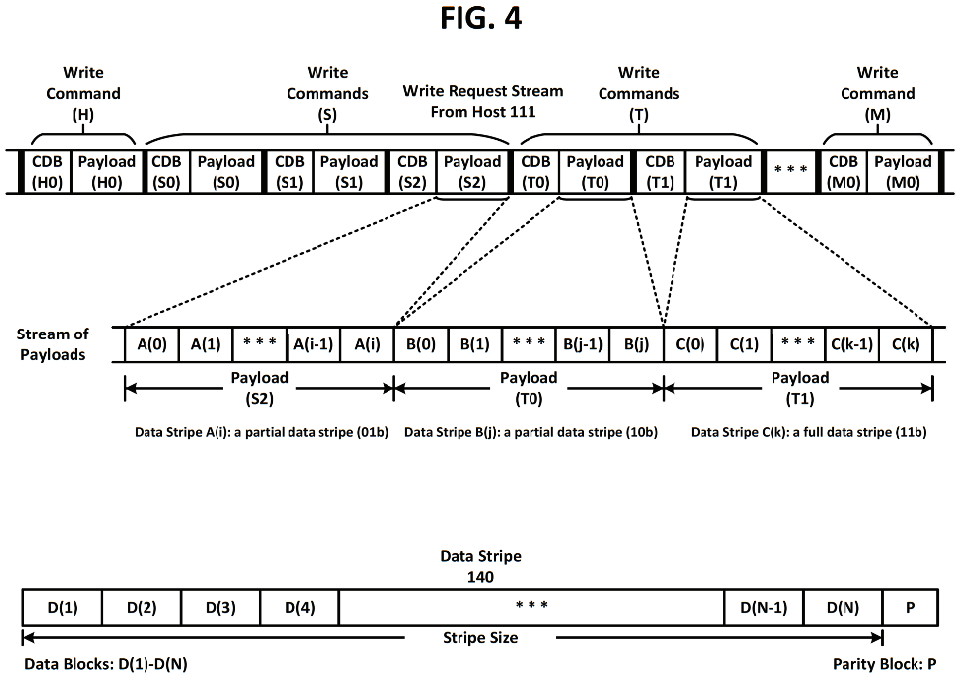

In step 215 of FIG. 2, controller 112 may populate data stripe 140 with data blocks. FIG. 4 illustrates an example data stripe 140. Data stripe 140 is a structured sequence of data blocks D(1)-D(N), with "N" being an integer greater than 1. A plurality of data blocks D(1)-D(N) is collectively referred to as "data blocks." Any one of the data blocks D(1)-D(N) is individually referred to as "data block." Within data stripe 140, each of the data blocks is of the same size. The size of the data block is a predetermined value.

In FIG. 4, data stripe 140 is populated with one or more data blocks. Referred to herein, a stripe size is the maximum number "N" of data blocks that controller 112 may populate within a single data stripe 140.

Controller 112 may parse logical block address field 312 to extract the logical block address from command descriptor block 310. Logical block address field 312 may indicate the starting address where the write command should begin in a logical space. Referred to herein, a logical block address is a numerical identifier assigned to a location in logical space. The logical space is a conceptual model of an abstract storage medium. The starting address is where the writing of the payload is to begin in the logical space.

Controller 112 may also extract a transfer length from transfer length field 313. The transfer length may refer to the size of the payload to be written in the logical space. For instance, the transfer length may be the maximum number "N" of consecutive, fixed size data blocks of the payload to be written into each data stripe 140. Each being of the same size, a data block is the smallest addressable unit in the logical space. Controller 112 may populate a data stripe 140 with the data blocks in response to converting the payload into the data blocks. Transfer length field 313 may specify the number of data blocks to populate within data stripe 140.

Through logical block address field 312 and transfer length field 313, host 111 may specify the starting address and the amount of data to be transferred during the write command. Upon populating data stripe 140 with data blocks, controller 112 may advance the processing in FIG. 2 from step 215 to step 220.

In step 220 of FIG. 2, controller 112 may determine whether data stripe 140 residing in memory 113 is a full or partial stripe. A full stripe is data stripe 140 where controller 112 populates all of the data blocks in data stripe 140 with user data. This happens when controller 112 writes data to each data block in data stripe 140. In contrast, a partial stripe is data stripe 140 where controller 112 writes data to only some of the data blocks in data stripe 140 while one or more of the data blocks in data stripe 140 remain unused or unchanged. Controller 112 may advance the processing in FIG. 2 from step 240 to step 240 in response to determining that data stripe 140 is a full stripe. Otherwise, controller 112 may advance the processing in FIG. 2 from step 220 to step 230 in response to determining that data stripe 140 is a partial stripe.

In step 225 of FIG. 2, controller 112 may derive a proximity of a write command relative to another write command in the write request stream. For instance, controller 112 may derive the proximity from the binary value of the proximity metadata in the Vendor Specific field. By way of illustration, control byte 314 in FIG. 3 provides metadata that define execution parameters for the command descriptor block 310. The metadata may include NACA (Normal Auto Contingent Allegiance) metadata and proximity metadata.

The NACA metadata is an instruction as to how a target 131 may manage errors. For example, while the NACA is set to 1, the target 131 may suspend processing of subsequent command descriptor block 310 from server 110 until an error is resolved. For cases where the NACA is set to 0, the target 131 may continue processing subsequent command descriptor block 310 even in the event that an error occurs.

Regarding proximity metadata, host 111 may identify the proximity of one write command relative to another write command. Referred to herein, proximity is the spatial or temporal relationship between multiple write commands. For instance, spatial proximity refers to the closeness or adjacency of logical block addresses, data blocks, write commands, and/or write operations. Temporal proximity refers to the closeness or sequence of events, commands, or operations in time, indicating how closely grouped or sequentially issued they are within an execution timeline for server 110. Overlapping proximity may occur in cases where multiple write commands address the same or overlapping logical block ranges.

The Vendor Specific field in the control byte 314 may provide a reserved area to implement proprietary features associated with server 110. Referred to herein, proprietary features are unique functionalities, designs, or technologies that are owned and controlled by a specific company or entity. In response to identifying the proximity of write operations, host 111 may update the Vendor Specific field in control byte 314 to convey the proximity to controller 112.

Host 111 may set the proximity metadata in the Vendor Specific field to a binary value of 00b. The binary value of 00b in the Vendor Specific field indicates that the Vendor Specific field will have no bearing on the write operation. Host 111 may set the Vendor Specific field in command descriptor block (CDB) of any write command to the binary value of 00b. For example, host 111 may set the Vendor Specific field in command descriptor block CDB (M0) of write command (M) to the binary value of 00b. In such instances where host 111 sets the proximity metadata in the Vendor Specific field to the binary value of 00b, controller 112 may advance the processing in FIG. 2 from step 225 to step 240.

Host 111 may set the proximity metadata in the Vendor Specific field to a binary value of 01b. A binary value of 01b in the Vendor Specific field indicates the first or intermediate write operation of a data stream that can be write coalesced. Host 111 may set the Vendor Specific field in command descriptor block (CDB) of any write command to the binary value of 01b. For example, host 111 may set, to the binary value of 01b, the Vendor Specific field in command descriptor block CDB (S2). In such instances where host 111 sets the proximity metadata in the Vendor Specific field to the binary value of 01b, controller 112 may advance the processing in FIG. 2 from step 225 to step 230.

Host 111 may set the proximity metadata in the Vendor Specific field to a binary value of 10b. A binary value of 10b in the Vendor Specific field indicates the last write operation of the data stream that can be write coalesced. Host 111 may set the Vendor Specific field in command descriptor block (CDB) of any write command to the binary value of 10b. For example, host 111 may set, to the binary value of 10b, the Vendor Specific field in command descriptor block CDB (T0). In such instances where the proximity metadata in the Vendor Specific field is set to the binary value of 10b, controller 112 may advance the processing in FIG. 2 from step 225 to step 240.

Host 111 may set the proximity metadata in the Vendor Specific field to a binary value of 11b. A binary value of 11b in the Vendor Specific field indicates that the write operation is part of a non-contiguous but closely proximal group of write commands. The term "non-contiguous but closely proximal group of write commands" refers to write commands targeting data blocks stored at distinct, non-sequential logical addresses within a small, defined range in storage array 130. A small, defined range may include a segment of logical block addresses, a portion of a data stripe 140, and/or a localized section of the logical space.

Host 111 may set the Vendor Specific field in command descriptor block (CDB) of any write command to the binary value of 11b. For example, host 111 may set, to the binary value of 11b, the Vendor Specific field in command descriptor block CDB (T1). In such instances where the proximity metadata in the Vendor Specific field is set to the binary value of 11b, controller 112 may advance the processing in FIG. 2 from step 225 to step 230.

The Vendor Specific field may convey the proximity to controller 112. Controller 112 may parse the Vendor Specific field to extract the proximity metadata from command descriptor block 310. Upon extracting the proximity metadata from command descriptor block 310, controller 112 may derive the proximity of one write command relative to another write command. For instance, controller 112 may derive the proximity of one write command relative to another write command from the binary value of the proximity metadata in the Vendor Specific field.

In step 230 of FIG. 2, controller 112 may verify whether or not the time duration has lapsed. A lapse of the time duration may occur when the elapsed amount of time from step 210 to step 230 of FIG. 2 is greater than the time duration. Controller 112 may advance the processing in FIG. 2 from step 230 to step 240 in response to verifying a lapse of the time duration. Otherwise, controller 112 may advance the processing in FIG. 2 from step 230 to step 235 in response to verifying that the time duration is not lapsed.

In step 235, controller 112 may receive a write request stream from host 111. In the absence of receiving the write request stream from host 111, controller 112 may return the processing in FIG. 2 from step 235 to step 230. Also, controller 112 may return the processing in FIG. 2 from step 235 to step 230 in the absence of detecting a write operation code in command type field 311. On the other hand, upon receipt of the write request stream in step 235, controller 112 may parse command byte 311 to ascertain the operation to be executed. Controller 112 may queue a payload corresponding to the command descriptor block 310 into memory 113 and advance the processing in FIG. 2 from step 235 to step 215 in response to detecting a write operation code in the command type field 311 of a command descriptor block 310.

In step 240, controller 112 may calculate parity for data stripe 140. Referring to FIG. 4, data stripe 140 may include a parity block along with the data blocks. The parity block may happen to be of the same size as an individual data block within data stripe 140. In many implementations, controller 112 may derive the parity values for the data in the parity block. For instance, controller 112 may perform an XOR (exclusive OR) operation to derive the parity values. While performing the XOR operation, controller 112 may compare the corresponding bits of multiple data blocks within data stripe 140 and output a value of "1" when the bits differ and "0" when the bits are the same. Controller 112 may repeat the XOR operation across all data blocks in data stripe 140 to generate the parity block.

Controller 112 may calculate parity differently depending on whether the write operation involves an entire data stripe 140 (full-stripe write) or only a portion of a data stripe 140 (partial-stripe write). For a full-stripe write, controller 112 may generate parity by performing an XOR operation across all data blocks within data stripe 140, eliminating the need to read existing data from storage array 130. In contrast, during a partial-stripe write, controller 112 may use the XOR operation in conjunction with a process that reads existing data from storage array 130 to correctly update the parity. Controller 112 may advance the processing in FIG. 2 from step 240 to step 245 in response to calculate parity for data stripe 140.

In step 245, controller 112 may write data stripe 140 to storage array 130. Thereafter, controller 112 may advance the processing in FIG. 2 from step 245 to step 250.

In step 250 of FIG. 2, controller 112 may determine whether in memory 113 there are any remaining data to be written into storage array 130. Referred to herein, a remaining data is data in the payload that is absent from data stripe 140. Controller 112 may advance the processing in FIG. 2 from step 250 to step 205 in response to determining that memory 113 is empty of any remaining data blocks. In response to determining that remaining data blocks exist in memory 113, controller 112 may advance the processing in FIG. 2 from step 250 to step 215.

Upon advancing the processing in FIG. 2 from step 250 to step 215, controller may continue the processing in FIG. 2 for each subsequent data stripe 140, ensuring that the entirety of the payload is written to the logical space. To illustrate, the example of FIG. 4 depicts a data stream that may include a stream of payloads (S2), (T0) and T(1). Payload (S2) may include data stripes A(0) to A(i), with "i" being an integer. Payload (T0) may include data stripes B(0) to B(j), with "j" being another integer. Payload (T1) may include data stripes C(0) to C(k), with "k" being yet another integer.

A data stripe 140 may extend across more than one payload in some instances. For example, a data stripe 140 may be a combination of data blocks from one payload and data blocks from another payload. Referred to herein, a stripe boundary is the division point between two adjacent data stripes. The strip boundary marks a transition from one data stripe to the next data stripe. By way of illustration, a stripe boundary may exist between data stripe A(i) and data stripe B(0).

The data blocks from payload (S2) partially fill data stripe A(i) in the example of FIG. 4. In such circumstances, host 111 may set, to the binary value of 01b, the proximity metadata in the Vendor Specific field of command descriptor block CDB (S2). A binary value of 01b in the Vendor Specific field indicates the first or intermediate write operation of a data stream that can be write coalesced. In those instances where host 111 sets the proximity metadata in the Vendor Specific field to the binary value of 01b, controller 112 may advance the processing in FIG. 2 from step 215 to step 230 through steps 220 and 225. Thereafter, controller 112 may further advance the processing in FIG. 2 from step 230 to step 235 in response to verifying that the time duration is not lapsed. Upon receipt of payload (T0) in step 235, controller may return the processing in FIG. 2 to step 215 from step 235. In step 215 of FIG. 2, controller 112 may fill the unfilled portions of data stripe A(i) with the first data blocks from payload (T0) in the example of FIG. 4. Thereafter, controller 112 may advance the processing in FIG. 2 from step 215 to step 240 through step 220 while avoiding step 225.

The data blocks from payload (T0) partially fill data stripe B(j) in the example of FIG. 4. In such circumstances, host 111 may set, to the binary value of 10b, the proximity metadata in the Vendor Specific field of command descriptor block CDB (T0). A binary value of 10b in the Vendor Specific field indicates the last write operation of the data stream that can be write coalesced. In those instances where host 111 sets the proximity metadata in the Vendor Specific field to the binary value of 10b, controller 112 may advance the processing in FIG. 2 from step 215 to step 240 through steps 220 and 225.

The data blocks from payload (T1) completely fill data stripe C(k) in the example of FIG. 4. In such circumstances, host 111 may set, to the binary value of 11b, the proximity metadata in the Vendor Specific field of command descriptor block CDB (T1). A binary value of 11b in the Vendor Specific field indicates that the write operation is part of a non-contiguous but closely proximal group of write commands. In those instances where host 111 sets the proximity metadata in the Vendor Specific field to the binary value of 11b, controller 112 may advance the processing in FIG. 2 from step 215 to step 240 through step 220 while avoiding step 225.

As an improved server, host 111 has complete knowledge of any write operation such as a starting logical block address, the total number of consecutive data blocks being affected by a single write command and/or consecutive contiguous write commands, and the last logical block address written to by a write request stream. Similarly, host 111 is also better positioned to identify non-contiguous writes issued to logical block addresses that are remarkably close to each other.

For example, when a data from a large video file is being written to storage array 130, the logical block addresses in each write command are often sequential and host 111 can mark the generated command descriptor blocks as sequential. Similarly, when multiple non-contiguous logical block addresses in close proximity of a file are being written to in near-simultaneous writes, host 111 can be mark command descriptor blocks to indicate the same.

SCSI command descriptor blocks are very generic and there are no fields to transfer information specific to such optimization dependent write operation patterns. However, all command descriptor blocks (including the SCSI Write command descriptor block) have a Vendor Specific field (MSB bits 6 and 7) on the control byte (all command descriptor blocks have a control byte).

The Vendor Specific fields are not defined by the SCSI standard and may be used differently in various implementations. For virtual devices, the underlying physical drives are not exposed to the host. In addition, the command descriptor block does not reach a physical drive directly in case of virtual devices since the write operations issued to virtual devices are interpreted by the storage array controller which manages the virtual devices. So the Vendor Specific field can be used to transfer information relevant to virtual devices.

Controller 112 will read the Vendor Specific field and take the necessary course of action based on the value e.g., coalesce the write operations and issue them together as full row writes to virtual devices or group the write operations within fall within a range of a few MBs and submit to an underlying drive for command queueing and reordering.

Advantages resulting from server 110 are numerous. For instance, host 111 specifies write operations the command descriptor block, where the write operation originates. As a consequence, there is no need for controller 112 to track every write operation to identify the ones in close proximity.

Since the sequential command descriptor blocks are specified by host 111, write operations which are not write coalescing candidates can be executed immediately as regular write operations. This reduces false detection and performance degradation when random write operations are issued along with sequential writes.

Controller 112 can identify the sequential write operations based on the value of the Vendor Specific field in the command descriptor block, even when the write operations are issued in exceedingly small chunks.

Controller 112 can identify a group of sequential write operations, even when they are unaligned across row boundaries, split such write operations and process only the fragments which can be write coalesced and issued as full row writes for write coalescing. The writes to the logical block addresses at the beginning and end of the stream which do not cover complete rows can be executed individually.

Host 111 can group together non-contiguous write operations in close proximity. As a result, server 110 can issue the non-contiguous write operations to the storage array 130 for command queueing where they can be order by the targets 131 and executed for optimally.

Host 111 sets proximity metadata in the Vendor Specific field to communicate the proximity to controller 112. The Vendor Specific field is present in a command descriptor block supported by the SCSI specification. When set by host 111, controller 112 can use proximity metadata in the Vendor Specific field to optimize write performance of server 110.

Server 110 can use the Vendor Specific field in the context of write operations to virtual devices. The Vendor Specific field can also be repurposed in real time to convey different meanings depending on the proximity of multiple writes issued within a small duration.

Those skilled in the art will also appreciate the arrangement or interconnection of components such as "coupled," "connected," "on," "under," or similar wording allows for indirect connections, or intervening components or layers.

Referred to herein, any of the terms "electrically connected directly," "electrically directly connected" and "directly electrically connected " means that two or more components are connected along a conductive path without any intermediary component therebetween.

Certain operations of methods according to the technology, or of systems executing those methods, may be represented schematically in the figures or otherwise discussed herein. Unless otherwise specified or limited, representation in the figures of particular operations in particular spatial order may not necessarily require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

As used herein, unless otherwise limited or defined, "or" indicates a non-exclusive list of components or operations that may be present in any variety of combinations, rather than an exclusive list of components that may be present only as alternatives to each other. For example, a list of "A, B, or C" indicates options of: A; B; C; A and B; A and C; B and C; and A, B, and C.

Correspondingly, the term "or" as used herein is intended to indicate exclusive alternatives only when preceded by terms of exclusivity, such as, e.g., "either," "only one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein only indicates exclusive alternatives (e.g., "one or the other but not both") when preceded by terms of exclusivity, such as, e.g., "either," "only one of," or "exactly one of."

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated only with such marks.

The articles "a," "an," and "the" are intended to include the plural forms as well, unless the context clearly indicates otherwise.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, ordinal numbers (e.g., first, second, third, and so forth.) may be used as an adjective for an element (i.e., any noun in the application).

Although terms such as "first," "second," and "third" may be used herein to describe various members, components, regions, layers, or sections, these members, components, regions, layers, or sections are not to be limited by these terms.

Rather, these terms are only used to distinguish one member, component, region, layer, or section from another member, component, region, layer, or section.

The use of ordinal numbers is not to imply or create any particular ordering of the elements nor to limit any element to being only a single element unless expressly disclosed, such as by the use of the terms "before," "after," "single," and other such terminology.

Rather, the use of ordinal numbers is to distinguish between the elements.

By way of an example, a first element is distinct from a second element, and the first element may encompass more than one element and succeed (or precede) the second element in an ordering of elements.

Thus, a first member, component, region, layer, or section referred to in examples described herein may also be referred to as a second member, component, region, layer, or section without departing from the teachings of the examples.

The invention further comprises the following embodiments forming part of the description:
1. An apparatus comprising:
   a host configured to set, for metadata in a field of a command structure, a binary value; and
   a controller configured to:
      parse, in response to receiving a stream of write commands from the host, the command structure in one of the write commands,
      extract, in response to parsing the command structure, the binary value from the metadata, and
      derive, from the binary value, a proximity of the one of the write commands relative to an additional one of the write commands in the stream.
2. The apparatus according to embodiment 1, wherein the field is a vendor specific field.
3. The apparatus according to embodiment 1, wherein the host is configured to convey, in response to setting the binary value, the proximity to the controller.
4. The apparatus according to embodiment 1, wherein the host is configured to issue the stream of the write commands to the controller.
5. The apparatus according to embodiment 1, wherein the host is configured to issue the stream of the write commands in response to setting the binary value.
6. The apparatus according to embodiment 1, wherein the host is configured to ascertain the proximity in the stream of the write commands.
7. The apparatus according to embodiment 1, wherein the controller is configured to ascertain, from the binary value, the proximity of the one of the write commands relative to another of the write commands.
8. The apparatus according to embodiment 1, wherein the controller is configured to ascertain, from the additional one of the write commands, the proximity of the additional one of the write commands relative to the one of the write commands.
9. The apparatus according to embodiment 1, wherein the proximity is a spatial relationship between the write commands.
10. The apparatus according to embodiment 1, wherein the proximity is a temporal relationship between the write commands.
11. The apparatus according to embodiment 1, wherein the one of the write commands comprises a payload.
12. The apparatus according to embodiment 11, wherein the host is configured to pair, in the one of the write commands, the payload with the command structure.
13. The apparatus according to embodiment 11, wherein the controller is configured to populate, in response to converting the payload into data blocks, a data stripe with the data blocks.
14. The apparatus according to embodiment 13, wherein the controller is configured to populate, in response to the controller partially filling the data stripe with the data blocks from the payload in the one of the write commands, the data stripe with data blocks from a payload in the additional one of the write commands.
15. The apparatus according to embodiment 14, wherein, the data stripe comprises:
   the data blocks from the payload in the one of the write commands,
   the data blocks from the payload in the additional one of the write commands.
16. A method comprising:
   setting, by a host, a binary value for metadata in a field of a command structure;
   receiving, by a controller from the host, a stream of write commands;
   parsing, by the controller, the command structure in one of the write commands;
   extracting, by the controller, the binary value from the metadata; and
   deriving, by the controller from the binary value, a proximity of the one of the write commands relative to an additional one of the write commands in the stream.
17. The method according to embodiment 16, wherein the one of the write commands comprises a payload.
18. The method according to embodiment 17, further comprising:
   pairing, by the host in the one of the write commands, the payload with the command structure.
19. The method according to embodiment 17, further comprising:
   converting, by the controller, the payload into data blocks, and
   populating, by the controller, a data stripe with the data blocks.
20. A system comprising:
   a server comprising a host and a controller; and
   a storage array configured to receive a data stripe from the server,
   wherein the host is configured to:
      pair a payload with a command structure, and
      set, for metadata in a field of the command structure, a binary value; and
      wherein the controller is configured to:
         parse, in response to receiving a stream of write commands from the host, the command structure in one of the write commands,
         extract, in response to parsing the command structure, the binary value from the metadata,
         derive, from the binary value, a proximity of the one of the write commands relative to an additional one of the write commands in the stream, and
populate, in response to converting the payload into data blocks, the data stripe with the data blocks.

## Claims

1. An apparatus comprising:
a host configured to set, for metadata in a field of a command structure, a binary value; and
a controller configured to:
parse, in response to receiving a stream of write commands from the host, the command structure in one of the write commands,
extract, in response to parsing the command structure, the binary value from the metadata, and
derive, from the binary value, a proximity of the one of the write commands relative to an additional one of the write commands in the stream.

2. The apparatus according to claim 1, wherein the field is a vendor specific field, and/or wherein the host is configured to convey, in response to setting the binary value, the proximity to the controller.

3. The apparatus according to claim 1 or claim 2, wherein the host is configured to issue the stream of the write commands to the controller, and/or wherein the host is configured to issue the stream of the write commands in response to setting the binary value.

4. The apparatus according to one of claims 1 to 3, wherein the host is configured to ascertain the proximity in the stream of the write commands, and/or wherein the controller is configured to ascertain, from the binary value, the proximity of the one of the write commands relative to another of the write commands.

5. The apparatus according to one of claims 1 to 4, wherein the controller is configured to ascertain, from the additional one of the write commands, the proximity of the additional one of the write commands relative to the one of the write commands, and/or wherein the proximity is a spatial relationship between the write commands.

6. The apparatus according to one of claims 1 to 5, wherein the proximity is a temporal relationship between the write commands.

7. The apparatus according to one of claims 1 to 6, wherein the one of the write commands comprises a payload.

8. The apparatus according to claim 7, wherein the host is configured to pair, in the one of the write commands, the payload with the command structure.

9. The apparatus according to claim 7 or claim 8, wherein the controller is configured to populate, in response to converting the payload into data blocks, a data stripe with the data blocks.

10. The apparatus according to claim 9, wherein the controller is configured to populate, in response to the controller partially filling the data stripe with the data blocks from the payload in the one of the write commands, the data stripe with data blocks from a payload in the additional one of the write commands, in particular wherein, the data stripe comprises:
the data blocks from the payload in the one of the write commands,
the data blocks from the payload in the additional one of the write commands.

11. A method comprising:
setting, by a host, a binary value for metadata in a field of a command structure;
receiving, by a controller from the host, a stream of write commands;
parsing, by the controller, the command structure in one of the write commands;
extracting, by the controller, the binary value from the metadata; and
deriving, by the controller from the binary value, a proximity of the one of the write commands relative to an additional one of the write commands in the stream.

12. The method according to claim 11, wherein the one of the write commands comprises a payload.

13. The method according to claim 12, further comprising:
pairing, by the host in the one of the write commands, the payload with the command structure.

14. The method according to claim 12 or claim 13, further comprising:
converting, by the controller, the payload into data blocks, and
populating, by the controller, a data stripe with the data blocks.

15. A system comprising:
a server comprising a host and a controller; and
a storage array configured to receive a data stripe from the server,
wherein the host is configured to:
pair a payload with a command structure, and
set, for metadata in a field of the command structure, a binary value; and
wherein the controller is configured to:
parse, in response to receiving a stream of write commands from the host, the command structure in one of the write commands,
extract, in response to parsing the command structure, the binary value from the metadata,
derive, from the binary value, a proximity of the one of the write commands relative to an additional one of the write commands in the stream, and
populate, in response to converting the payload into data blocks, the data stripe with the data blocks.
